# EUROPEAN PATENT APPLICATION

(11) **EP 1 253 184 A1**
(43) Date of publication of application: **30.10.2002**
(21) Application number: 00979931.3
(22) Date of filing: 06.12.2000
(51) Int. Cl.: C10M 105/52, C10M 105/06, C10M 127/06, C10N 30/00

(54) **HYDRAULIC FLUID AND REFRIGERATING APPARATUS**

(30) Priority: 28.12.1999 JP 37344699
(71) Applicant: Daikin Industries, Ltd., Osaka-shi, Osaka 530-8323 (JP)
(72) Inventor: TAIRA, Shigeharu Shiga-seisakusho Daikin Ind. Ltd, Kusatsu-shi, Shiga 525-0044 (JP)
(74) Representative: HOFFMANN EITLE
(86) International application number: JP0008613
(87) International publication number: WO01048125

(57) **Abstract**

There is provided a working fluid and a refrigerating machine for preventing clogging in a depressurizing mechanism even with use of HFC-base refrigerants. A refrigeration circuit 1 is filled with a working fluid composed of an HFC-base refrigerant containing 50 wt% or more R32 and a mixed refrigerating machine oil. The mixed refrigerating machine oil is made up of a synthetic oil such as an ether oil and an ester oil, and an alkylbenzene-base oil, and the alkylbenzene-base oil accounts for 1 to 90 wt% of the mixed refrigerating machine oil.

## Description

### TECHNICAL FIELD

The present invention relates to a working fluid for use in a refrigerating machine and to a refrigerating machine.

### BACKGROUND ART

In recent years, in the field of refrigerating machines, HCFC (hydrochlorofluorocarbon)-base refrigerants have become targets of regulation for preventing depletion of the ozone layer. Consequently, HFC (hydrofluorocarbon)-base refrigerants have begun to be used as alternative refrigerants. Synthetic oils such as an ether oil and an ester oil are used as refrigerating machine oils for use with the HFC-base refrigerants because mutual solubility with HFC-base refrigerants is one of the important characteristics of the refrigerating machine oils.

However, since the synthetic oils such as an ether oil and an ester oil have strong polarity, they have a tendency to dissolve residual impurities excluding HFC-base refrigerants. Accordingly, a refrigerating machine with use of a working fluid composed of a HFC-base refrigerant and a synthetic oil has a problem that a depressurizing mechanism composed of a motor-driven expansion valve or a capillary is susceptible to clogging caused by sludge and contamination generated after evaporation of the HFC-base refrigerant. If the clogging occurs, the refrigerating machine becomes inoperative.

### DISCLOSURE OF THE INVENTION

Accordingly, it is an object of the present invention to provide a working fluid and a refrigerating machine for preventing clogging in a depressurizing mechanism even with use of HFC-base refrigerants.

In order to accomplish the above object, a working fluid in one aspect of the present invention comprises:
an HFC-base refrigerant containing R32 at at least 50 wt%; and
a mixed refrigerating machine oil composed of a synthetic oil and an alkylbenzene-base oil,
the alkylbenzene-base oil accounting for 1 to 90 wt% of the mixed refrigerating machine oil.

The synthetic oil herein refers to an oil other than mineral oils, such as an ether oil, an ester oils, and a fluorine oil. The alkylbenzene-base oil refers to an oil that contains alkylbenzene as a main component and may naturally contain a small amount of additives.

Since the working fluid, which is composed of an HFC-base refrigerant containing 50 wt% or more R32 and a mixed refrigerating machine oil made up of a synthetic oil such as an ether oil and an ester oil and so on, and 1 to 30 wt% alkylbenzene-base oil, contains the synthetic oil with strong polarity, contamination or slug is easily generated and the generated contamination or slug may briefly be attached to depressurizing mechanisms such as capillaries and motor-driven expansion valves. However, the alkylbenzene-base oil washes and removes the contamination and sludge away from the depressurizing mechanisms, which enables prevention of clogging in the depressurizing mechanisms. Also, since the mixed refrigerating machine oil contains the synthetic oil, there is provided good mutual solubility between the HFC-base refrigerant containing 50 wt% or more R32 and the mixed refrigerating machine oil, thereby implementing good lubrication. This improves reliability of compressors. Further, since the working fluid is excellent in electric insulation, electrical failure of the refrigerating machine is prevented.

More particularly, if a ratio of an alkylbenzene-base oil to a mixed refrigerating machine oil containing a synthetic oil such as an ether oil, an ester oil, a fluorine oil and so on is in excess of 1 wt%, improvement of a clogging rate is found. If the ratio of the alkylbenzene-base oil increases over 1 wt%, the clogging rate is improved with increase of alkylbenzene-base oil wt%. If the ratio of the alkylbenzene-base oil is in excess of 90 wt%, clogging prevention efficiency does not show substantial change from the clogging prevention efficiency at the ratio of 90 wet%. It is noted that the clogging rate refers to a decreased percentage (%) of a flow rate caused by clogging of a capillary. For example, a clogging rate of 10% signifies that a flow rate decreases by 10% due to clogging of the capillary compared to the flow rate without clogging of the capillary.

If a ratio of an alkylbenzene-base oil to a synthetic oil such as an ether oil, an ester oil, and a fluorine oil is increased, mutual solubility (compatibility) between a mixed refrigerating machine oil and an HFC-base refrigerant containing 50 wt% or more R32 is deteriorated. However, unless a ratio of the alkylbenzene-base oil to the mixed refrigerating machine oil exceeds 90 wt%, the compatibility will not deteriorate so much as becoming a substantial problem.

In terms of electric insulation of the working fluid, if an alkylbenzene-base oil exceeds 90 wt% in a mixed refrigerating machine oil, electric insulation of the working fluid is decreased, which generates a large amount of leakage current, thereby making the working fluid improper for use in refrigerating machines. The alkylbenzene-base oil accounting for 90 wt % or less in the mixed refrigerating machine oil will not cause a substantial problem of leakage current due to the working fluid.

In one embodiment, the alkylbenzene-base oil accounts for 5 to 90 wt% of the mixed refrigerating machine oil.

If a ratio of the alkylbenzene-base oil to the mixed refrigerating machine oil is in excess of 5 wt%, considerable removing and washing efficiency is obtained.

In one embodiment, the synthetic oil is composed of substantially an ether oil, an ester oil, and a fluorine oil. It is noted that the term "substantially" is used in this specification for confirmatively stating that there may be contained a small amount of additives such as stabilizers and antioxidants that are generally neglected by those skilled in the art when "so-and-so oil" is referred.

Since the synthetic oil is substantially composed of an ether oil, an ester oil, or a fluorine oil, there is provided good compatibility between the mixed refrigerating machine oil containing the synthetic oil and an HFC-base refrigerant containing 50 wt% or more R32. This ensures sufficient supply of the mixed refrigerating machine oil to a compressor, thereby improving reliability of the compressor.

In one embodiment, the HFC-base refrigerant is substantially an R32 single refrigerant.

In the above embodiment, since the HFC-base refrigerant is substantially an R32 single refrigerant, there is implemented the same operation and effect as those in the case of using an HFC-base refrigerant containing at least 50 wt% R32. In addition, use of the R32 single refrigerant further improves COP (coefficient of performance) .

The refrigerating machine in another aspect of the present invention fills any one of the working fluids into a refrigeration circuit.

Since the refrigerating machine of the present invention uses an HFC-base refrigerant containing at least 50 wt% R32, it does not destroy the ozone layer and achieves good COP (coefficient of performance). Further, since the working fluid is composed of an HFC-base refrigerant containing at least 50 wt% R32 and a mixed refrigerating machine oil containing a synthetic oil and 1 to 90 wt%, more preferably 5 to 90 wt% alkylbenzene-base oil, even if contamination and sludge are attached to the depressurizing mechanism, they will be removed and washed away by the alkylbenzene-base oil, which prevents occurrence of clogging in the depressurizing mechanism. In addition, the mixed refrigerating machine oil containing a synthetic oil and 1 to 90 wt%, more preferably 5 to 90 wt% alkylbenzene-base oil provides good compatibility between the HFC-base refrigerant and the mixed refrigerating machine oil, which improves lubrication, increases reliability of the compressor, and secures high electric insulation, thereby ensuring that substantially no leakage current occurs. Therefore, the refrigerating machine of the present invention implements high reliability.

### BRIEF DESCRIPTION OF THE DRAWINGS

Fig. 1 is a refrigeration circuit diagram of an air conditioner in an embodiment of the present invention;
Fig. 2 is a graph showing relationship between wt% of an alkylbenzene-base oil to a mixed refrigerating machine oil and a clogging rate;
Fig. 3 is a graph showing relationship between wt% of an alkylbenzene-base oil to a mixed refrigerating machine oil and compatibility of R32 with the mixed refrigerating machine oil;
Fig. 4 is a graph showing relationship between wt% of an alkylbenzene-base oil to a mixed refrigerating machine oil and leakage current;
Fig. 5 is a picture showing a chemical change state of a clogged capillary dipped in a working fluid composed of a mixed refrigerating machine oil made up of 70 wt% ether oil and 30 wt% alkylbenzene-base oil and an R32 single refrigerant for 300 hours; and
Fig. 6 is a picture showing a chemical change state of a clogged capillary dipped in a working fluid composed of an R32 single refrigerant and an ether oil for 300 hours.

### BEST MODE FOR CARRYING OUT THE INVENTION

The present invention will be hereinafter described in detail in conjunction with the embodiment with reference to accompanying drawings.

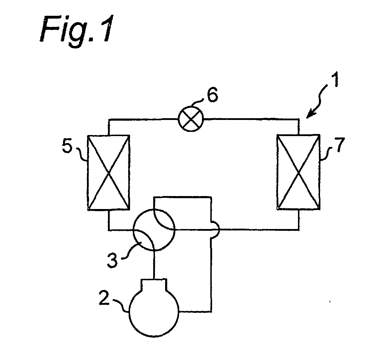

Fig. 1 shows a refrigeration circuit 1 of an air conditioner as one example of a refrigerating machine. The refrigeration circuit 1 is made up of a compressor 2, a four-way changeover valve 3, an outdoor heat exchanger 5, a motor-driven expansion valve 6 exemplifying a depressurizing mechanism, and an indoor heat exchanger 7, each connected in sequence.

The refrigeration circuit 1 is filled with a working fluid composed of an HFC-base refrigerant containing 50 wt% or more R32 and a mixed refrigerating machine oil. The mixed refrigerating machine oil is made up of an ether oil exemplifying a synthetic oil, and an alkylbenzene-base oil as a clogging preventive. The alkylbenzene-base oil accounts for 1 to 90 wt% of the mixed refrigerating machine oil. It is noted that R125, R22, carbon dioxide gas or the like is used as a remaining refrigerant component of the HFC-base refrigerant containing at least 50 wt% R32.

In the case of the working fluid composed of an HFC-base refrigerant containing 50 wt% or more R32 and a mixed refrigerating machine oil containing 1 to 90 wt% alkylbenzene-base oil in addition to an ether oil, if contamination and sludge are generated by an ether oil with strong polarity, the alkylbenzene-base oil removes and washes away the contamination and sludge, thereby preventing clogging in places such as the motor-driven expansion valve 6. Also, since the mixed refrigerating machine oil contains an ether oil, there is provided good compatibility between the HFC-base refrigerant containing 50 wt% or more R32 and the mixed refrigerating machine oil, which secures lubrication of the compressor 2 and provides good electric insulation. This imparts extremely high reliability to the air conditioner. As shown above, good compatibility, good clogging preventing performance, and good electric insulation of the working fluid are attributed to synergism brought by an HFC-base refrigerant containing 50 wt% or more R32, a mixed refrigerating machine oil containing an ether oil, and an alkylbenzene-base oil contained at 1 to 90 wt% in the mixed refrigerating machine oil.

The working fluid uses an HFC-base refrigerant containing at least 50 wt% R32, so that it does not destroy the ozone layer and good COP (coefficient of performance) is provided.

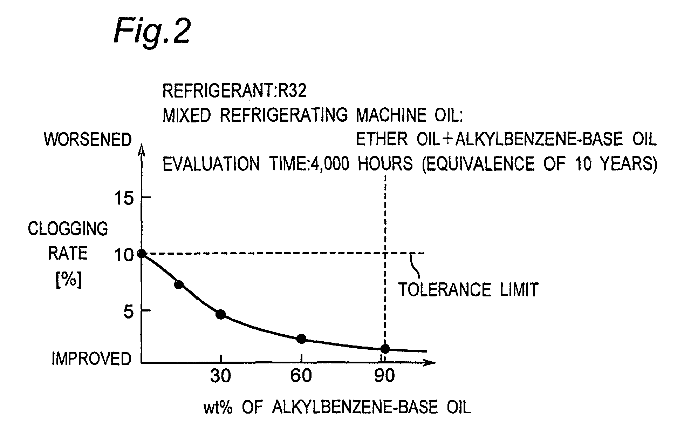

Fig. 2 shows a clogging rate with change of wt% of an alkylbenzene-base oil to a mixed refrigerating machine oil in the case of the working fluid composed of an R32 single refrigerant that is one of the HFC-base refrigerants and the mixed refrigerating machine oil made up of an ether oil (Idemitsu Kosan Co. Ltd.: Product No. FVC68D) and an alkylbenzene-base oil. It is noted that evaluation time is 4,000 hours that is equivalent to 10 years of operating time of the air conditioner.

As shown in Fig. 2, increase of wt% of the alkylbenzene-base oil to the mixed refrigerating machine oil reduces the clogging rate. Particularly, when wt% of the alkylbenzene-base oil to the mixed refrigerating machine oil is in excess of 5 wt%, the clogging rate becomes extremely small and approximately perfect for practical usage. It is noted that although not clearly shown in Fig. 2, improvement of the clogging rate is confirmed at a ratio of the alkylbenzene-base oil in excess of 1 wt% to the mixed refrigerating machine oil. Also, as is clear from Fig. 2, if the ratio of the alkylbenzene-base oil is in excess of 90 wt%, clogging prevention efficiency does not show substantial change from the clogging prevention efficiency at the ratio of 90 wet%. In view of the clogging rate, it is found out that a ratio of the alkylbenzene-base oil to the mixed refrigerating machine oil is preferably 1 to 90 wt%, and more preferably 5 to 90 wt%.

This tendency is almost the same in the case where an ester oil or a fluorine oil are substituted for the ether oil as a base oil of the mixed refrigerating machine oil, or an HFC-base refrigerant containing 50 wt% or more R32 is substituted for the R32 single refrigerant as a refrigerant.

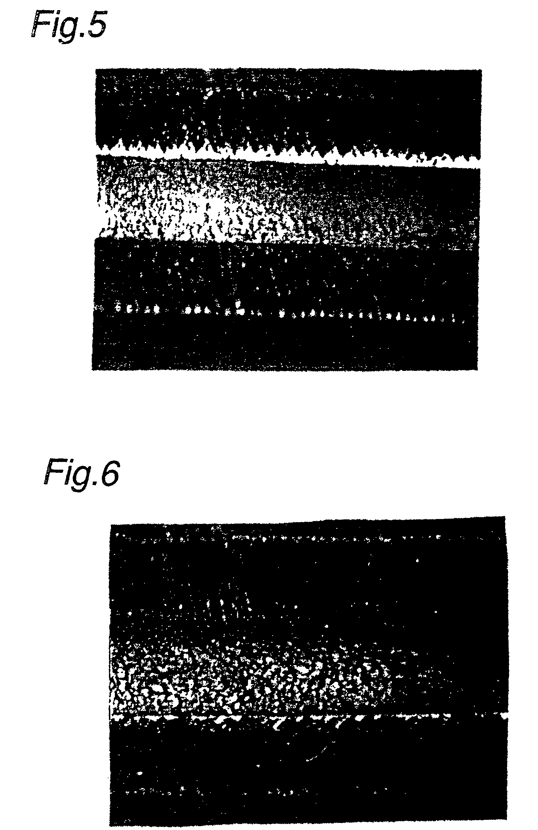

Figs.5 and 6 are pictures each showing a chemical change state of a clogged capillary dipped in a working fluid composed of a mixed refrigerating machine oil made up of 70 wt% ether oil and 30 wt% alkylbenzene-base oil and an R32 single refrigerant and in a working fluid composed of an R32 single refrigerant and an ether oil for 300 hours. Figs. 5 and 6 indicate that use of the mixed refrigerating machine oil containing an alkylbenzene-base oil enables effective removal of contamination and sludge.

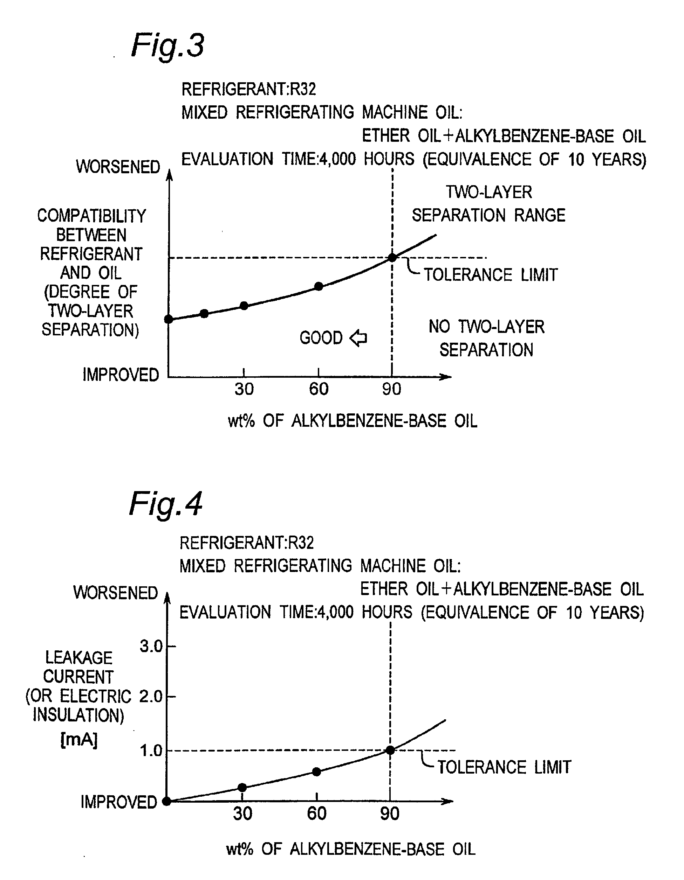

Fig. 3 shows compatibility between an R32 single refrigerant and a mixed refrigerating machine oil with change of wt% of an alkylbenzene-base oil to the mixed refrigerating machine oil in the case of the working fluid composed of the R32 single refrigerant that is one of the HFC-base refrigerants and the mixed refrigerating machine oil made up of an ether oil (Idemitsu Kosan Co. Ltd.: Product No. FVC68D) and the alkylbenzene-base oil.

As shown in Fig. 3, increase of wt% of the alkylbenzene-base oil to the mixed refrigerating machine oil worsens compatibility between the mixed refrigerating machine oil and R32, and when wt% of the alkylbenzene-base oil is in excess of 90 wt%, the compatibility is worsened beyond a tolerance limit, causing two-layer separation. It is also found out that unless a ratio of the alkylbenzene-base oil to the mixed refrigerating machine oil exceeds 90 wt%, a substantial problem due to the insufficiency of compatibility will not occur. In other words, unless the ratio of the alkylbenzene-base oil is in excess of 90 wt%, tribology (lubrication) of the compressor 2 will not be affected and therefore reliability of the air conditioner will not be impaired.

This tendency is almost the same in the case where an ester oil or a fluorine oil are substituted for the ether oil as a base oil of the mixed refrigerating machine oil, or an HFC-base refrigerant containing 50 wt% or more R32 is substituted for the R32 single refrigerant as a refrigerant.

Fig. 4 shows leakage current, i.e. electric insulation, measured with change of wt% of an alkylbenzene-base oil to a mixed refrigerating machine oil in the case of the working fluid composed of an R32 single refrigerant that is one of the HFC-base refrigerants and the mixed refrigerating machine oil made up of an ether oil (Idemitsu Kosan Co. Ltd.: Product No. FVC68D) and the alkylbenzene-base oil.

As shown in Fig. 4, increase of wt% of the alkylbenzene-base oil to the mixed refrigerating machine oil increases leakage current and deteriorates electric insulation. When wt% of the alkylbenzene-base oil to the mixed refrigerating machine oil is in excess of 90 wt%, leakage current exceeds a tolerance limit (Japanese Standard value of 1mA). It is also found out that unless a ratio of the alkylbenzene-base oil to the mixed refrigerating machine oil exceeds 30 wt%, a substantial problem due to the leakage current will not occur.

This tendency is almost the same in the case where an ester oil is substituted for the ether oil as a base oil of the mixed refrigerating machine oil, or an HFC-base refrigerant containing 50 wt% or more R32 is substituted for the R32 single refrigerant as a refrigerant.

In view of the above-described clogging prevention efficiency, compatibility, and leakage current (electric insulation), it is found out that the working fluid composed of an HFC-base refrigerant containing 50 wt% or more R32 and a mixed refrigerating machine oil made up of a synthetic oil such as an ether oil, an ester oil and a fluorine oil and an alkylbenzene-base oil requires 1 to 90 wt% of the alkylbenzene-base oil in the mixed refrigerating machine oil, and the most preferable wt% thereof is 5 to 90 wt%. The above working fluid is chemically stable and free from deterioration in a long period of time.

Also, the working fluid is not easily clogged, which makes it possible to use inexpensive capillaries instead of motor-driven expansion valves in air conditioners.

Although in the above embodiment, an ether oil is used as a synthetic oil, the same operation effect is implemented if an ester oil or a fluorine oil is substituted for the ether oil.

Although in the above embodiment, the air conditioner has been described as an example of a refrigerating machine, the refrigerating machine may be an ice maker, a refrigerator, and a refrigerating plant.

As is clear from the above description, the working fluid in one aspect of the present invention is composed of an HFC-base refrigerant containing at least 50 wt% R32 and a mixed refrigerating machine oil made up of a synthetic oil such as an ether oil, an ester oil and a fluorine oil, and an alkylbenzene-base oil as a clogging preventive of 1 to 90 wt% to the mixed refrigerating machine oil, which brings the advantages that clogging in a depressurizing mechanism such as a capillary and a motor-driven expansion valve may be prevented, failure of compressors may be prevented due to good lubrication provided by satisfactory compatibility between the HFC-base refrigerant and the mixed refrigerating machine oil, and sufficient electric insulation is provided.

The working fluid in one embodiment has an alkylbenzene-base oil contained at 5 to 90 wt% in the mixed refrigerating machine oil, which implements extreme clogging prevention effect.

In the working fluid in one embodiment, since the synthetic oil is substantially composed of an ether oil, an ester oil, or a fluorine oil, there is provided good compatibility between the mixed refrigerating machine oil containing the synthetic oil and an HFC-base refrigerant containing 50 wt% or more R32. This ensures sufficient supply of lubricant to a compressor, thereby improving reliability of the compressor.

In one embodiment, since the HFC-base refrigerant is substantially an R32 single refrigerant, there is implemented the same operation and effect as those in the case of using an HFC-base refrigerant containing at least 50 wt% R32. In addition, use of the R32 single refrigerant further improves COP (coefficient of performance).

The refrigerating machine in another aspect of the present invention fills any one of the working fluids into a refrigeration circuit, which brings the advantages that clogging in depressurizing mechanisms in the refrigeration circuit is prevented, reliability of the compressor is improved due to good lubrication provided by satisfactory compatibility between the HFC-base refrigerant and the mixed refrigerating machine oil, and sufficient electric insulation provides high reliability.

## Claims

1. A working fluid comprising:
an HFC-base refrigerant containing R32 at at least 50 wt%; and
a mixed refrigerating machine oil composed of a synthetic oil and an alkylbenzene-base oil,
the alkylbenzene-base oil accounting for 1 to 90 wt% of the mixed refrigerating machine oil.

2. The working fluid as defined in Claim 1, wherein the alkylbenzene-base oil accounts for 5 to 90 wt% of the mixed refrigerating machine oil.

3. The working fluid as defined in Claim 1, wherein the synthetic oil is substantially composed of an ether oil, an ester oil, or a fluorine oil.

4. The working fluid as defined in Claim 2, wherein the synthetic oil is substantially composed of an ether oil, an ester oil, or a fluorine oil.

5. The working fluid as defined in Claim 1, wherein the HFC-base refrigerant is substantially an R32 single refrigerant.

6. The working fluid as defined in Claim 2, wherein the HFC-base refrigerant is substantially an R32 single refrigerant.

7. The working fluid as defined in Claim 3, wherein the HFC-base refrigerant is substantially an R32 single refrigerant.

8. A refrigerating machine comprising the working fluid of Claim 1 being filled in a refrigeration circuit.

9. A refrigerating machine comprising the working fluid of Claim 2 being filled in a refrigeration circuit.

10. A refrigerating machine comprising the working fluid of Claim 3 being filled in a refrigeration circuit.
